# EUROPEAN PATENT APPLICATION

(11) **EP 1 006 452 A2**
(43) Date of publication of application: **07.06.2000**
(21) Application number: 99123280.2
(22) Date of filing: 30.11.1999
(51) Int. Cl.: G06F 17/27

(54) **A method and system for creating a rules-based document**

(30) Priority: 02.12.1998 US 204127
(71) Applicant: PITNEY BOWES INC., Stamford, Connecticut 06926-0700 (US)
(72) Inventor: Levitsky, Paul A., Monroe, Connecticut 06468 (US)
(74) Representative: HOFFMANN - EITLE

(57) **Abstract**

A method and system for creating a document. The method begins with the selection (100) of a set of rules elements by parsing rules-based documentation. Any non-rules-based elements are then determined (102) before placing the rules elements and the non-rules-based documentation elements into a second set of rules formatted in a rules form. Particular text blocks are assigned to each of the rule elements before placing them into a pre-determined order and saving them in memory. The document itself is outlined by requirements elements defined by a set of proposal terms. The proposal terms are parsed so as to further determine a set of proposal elements which are formatted and saved in memory. Each of the requirements elements is tested (106) against each one of the rules elements to determine a match based upon a unique weighting requirement for each rule. Matches are merged (108) into the draft document and if the match can not be merged, then a set of instructions is associated with each of the requirements elements in the draft document as a query and/or a data prompt for selecting a desired text input. After assembly of the draft document, reconciliation is performed, wherein the system user is then allowed to respond to one or more queries and/or data prompts located within the draft document by entering responses into the document draft. A new sequence for each of the document elements is then entered and saved in memory as a document.

## Description

This invention relates generally to the field of computer systems operating in a single or multi-platform operating system environment, and more specifically to the field of document creation applications and related data processing. More specifically, the invention relates to a method and system for creating a document, in a data processing system.

Reference is made to European Application Serial Number (Attorney File No. 80 259, Applicant Docket No. E-790), entitled PRODUCT ARCHITECTURE RETRIEVAL INFORMATION SYSTEM, assigned to the assignee of this application and filed on even date herewith.

The creation of documents has experienced accelerated growth since the advent of the personal computer (PC) and its various progeny; the Internet and World Wide Web included. Widespread use of word processing programs and electronic mail (e-Mail) have made it possible to draft and cut and paste text to create new documents from bits and pieces of pre-existing text.

Cutting and pasting has served the document creation industry well. However, there has quickly grown a need and/or a desire to continue the accelerated growth of document creation. Thus, has come the introduction of software designed to create documentation without the need for cutting and pasting by a PC-user. Software of this type has been developed to aid in the creation of screenplays by applying formatting rules to input text; generate wills by having a system user answer a questionnaire which flows based upon a decision tree format; and, generate mailing lists based upon selected criteria being applied to a series of pre-selected attributes.

The ability to create documentation in a timely and efficient manner is extremely important to a number of industries or business areas. Two groups in particular which find themselves creating documents from a blend of boilerplate text, statutory requirements, and original input required for a specific use or opportunity are the legal and business development communities. These two areas are constantly "re-inventing" documentation when attempting to capture the terms of a relationship within the text of an agreement.

Agreements which state the terms of a business relationship are a melting pot of boilerplate language, statutory requirements, or individual terms. Drafting of these agreements is often time consuming and leads to problems when the state of the agreement draft lags behind the state of the agreement negotiation or even due dates for review or execution. Statutory requirements, in particular, require agreement modification, amendment, or in extreme cases termination where the purpose of the agreement has been frustrated because it did not conform to statutory requirements.

Statutes are essentially a list of rules together with provisions or exceptions for their use or promulgation. Each of the articles, paragraphs, or subparagraphs are generally numbered and/or easily separated into elements. Therefore, a system is required which can take the elements of a statute and apply them against the required text of an agreement or document to produce a statute-based document.

A solution to the problem of time consuming document creation is thus required which will address the need for accurate documentation within an accelerated time period. It is a purpose of this disclosure to provide for a solution which links the assembly of an agreement or document to statutory or rules-based analysis, while allowing for non-statutory based text addition.

According to one aspect of the invention, there is provided a method for creating a document, in a data processing system, comprising the steps of:
(a) selecting a set of rules elements for application to said document;
(b) determining a set of requirements comprising requirements elements which form an outline for said document;
(c) testing each of said requirements elements against each one of said set of rules elements to determine a match; and, if said match occurs then placing said match into a first memory; or, if said match does not occur, resulting in an unmatched requirements element, then flagging said unmatched requirements element and placing said unmatched requirements element into said first memory;
(d) combining each of said matches and each of said unmatched requirements elements into a set of document elements and assigning a sequence to each of said document elements;
(e) saving said set of sequenced document elements in a second memory as a draft document; and
(f) reconciling said matches in said draft document to form said document.

The method itself begins with the selection of a set of rules elements, from a rules-based document, for application to the document. The rules elements are selected from any one or more of a plurality of rules-based documentation, which includes: functional specifications; product specifications; regulations; lists; and rules promulgations.

The document itself is outlined through the determination of a set of requirements which in turn comprise requirements elements. Each of the requirements elements is tested against each one of the rules elements to determine a match; and, if a match occurs then placing the match into the system's memory. If the match does not occur, resulting in an unmatched requirements element, then the system flags the unmatched requirements element and places the unmatched requirements element into memory. Each of the matches and each of the unmatched requirements elements are combined into a set of document elements and then assigned a sequence. The set of sequenced document elements are saved in memory as a draft document; and, then the matches are reconciled in the draft document to form a finished document.

The set of rules to be applied is determined in a series of steps. The steps include identifying the rules-based documentation to be applied; then, parsing the rules-based documentation to determine a set of rules to be utilized for application to the document. Any non-rules-based documentation elements are then determined for application to the document before placing the rules elements and the non-rules-based documentation elements into a second set of rules, wherein the second set of rules comprises rule elements which are formatted in a rules form. Particular text blocks are then assigned to each of the rule elements before placing them, together with its particular text block into a pre-determined order. The rule elements are then saved in memory.

The set of requirements is determined in a series of steps. The steps begin with the determination of a set of proposal terms. The proposal terms are parsed so as to further determine a set of proposal elements. The proposal elements are placed into a requirements format and saved in memory.

The multiple memory means of the system may be located independently of each other, or may exist in co-located combinations. Varied memory means are contemplated wherein the memory may exist in the form of a PROM chip, PROM card, magnetic media, or other commercially available forms. The system layout, with respect to the memory, is at the convenience of the system designer. The system further comprises the display means which may be a printer or a monitor existing separately or in combination.

Matches are determined by selecting a requirements element to be tested. One or more key words are selected within the requirements element, wherein the key word is assigned a weight value. The key words are then matched against the set of rules wherein a match is determined based upon a unique weighting requirement for each rule; and, a target weight is determined for each of the matches. If the weight equals zero, then a non-match has occurred. Each of the matches is assigned a threshold weight; and, if the threshold is exceeded, then it is determined that a match has occurred. If the threshold has not been exceeded, then it is determined that a non-match has occurred.

Matches are merged into the draft document and if the match can not be merged, then a set of instructions is associated with each of the requirements elements in the draft document wherein the instructions further comprise a query and/or a data prompt for selecting a desired text input.

After assembly of the draft document, reconciliation is performed. Reconciliation comprises the step of displaying the draft document to a system user; the display is accomplished by printing a copy of the draft document or presenting the document elements on a monitor or screen. Document elements are displayed in sequential order. The system user is then allowed to respond to one or more queries and/or data prompts located within the draft document. The system user responds to the one or more queries and/or data prompts by entering responses into the document draft. A new sequence for each of the document elements is then entered and saved in memory as a document.

Matches are recorded as based upon a set of criteria corresponding to each of the rules in a set. The criteria further comprises: rules for highlighting text to be reconciled; rules for inserting text into the document; rules for bracketing and underlining text to be reconciled; and, rules for deleting text from the document.

For a better understanding of the invention and to show how the same may be carried into effect, reference will now be made, by way of example, to the accompanying drawings, in which:
FIG. 1 is a block diagram of a data processing system which is representative of a system which could act as host to a method according to one embodiment of the invention;
FIG. 2A is an upper level flowchart of the method of creating a statute or rules based document;
FIG. 2B is a continuation of the flowchart of FIG. 2A which details the method of creating a statute or rules based document;
FIG. 3 is a flowchart of the method of breaking down a selected statute or rules-based document into one or more instruction elements;
FIG. 4 is a flowchart of the method of breaking down a selected proposal into one or more requirements elements; and
FIG. 5 is a flowchart of the method of testing each document requirement against each element of an applicable instruction set to determine a match.

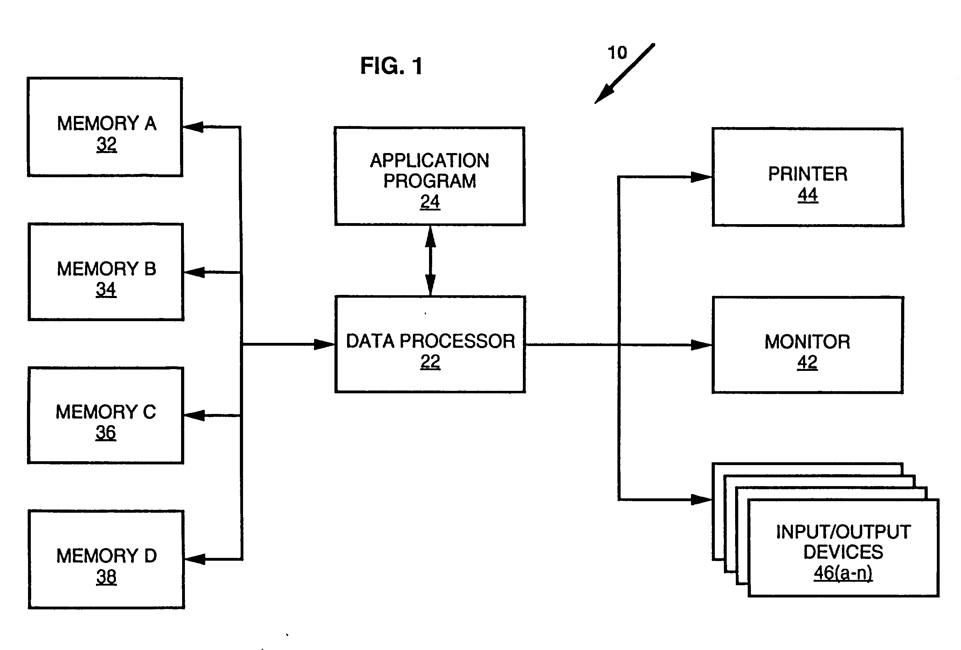

Turning to FIG. 1, there is shown a block diagram of a data processing system 10 which is representative of a host for a method according to one embodiment of the invention.

Data processing system 10 is based on data processor 22 which is a central processing unit (CPU) of a computer (such as a personal computer (PC), a mid-frame (IBM AS/400), or main frame) and its associated RAM or other memory, operating system software, and application systems which are capable of performing word processing functions (such as Word® which is available from Microsoft Corporation of Redmond, Washington) or more advanced print stream processing (such as StreamWeaver® which is available from Pitney Bowes Inc. of Stamford, Connecticut). The base components of the data processor 22 are known in the art and do not require a detailed description herein for an understanding of their utility and application.

Interoperatively connected to data processor 22 is the application program which is the basis for the present application. Additionally, connected to data processor 22 are memory cells 32, 34, 36, and 38 which are utilized for saving various matching routines performed by the application program 24. The multiple memory means of the system may be located independently of each other, or may exist in co-located combinations. Varied memory means are contemplated wherein the memory may exist in the form of a PROM chip, PROM card, magnetic media, or other commercially available forms. The system layout, with respect to the memory, is at the convenience of the system designer. Further coupled to data processor 22, is printer 44 for document or print stream data output, monitor 42 which allows a system operator to view transactions occurring within the application program 24, and various input/output devices 46(a-n). Input and output devices 46(a-n), such as a keyboard for data input, or a modem for data transmission or reception can be interoperatively connected or interfaced to data processor 22 as appropriate.

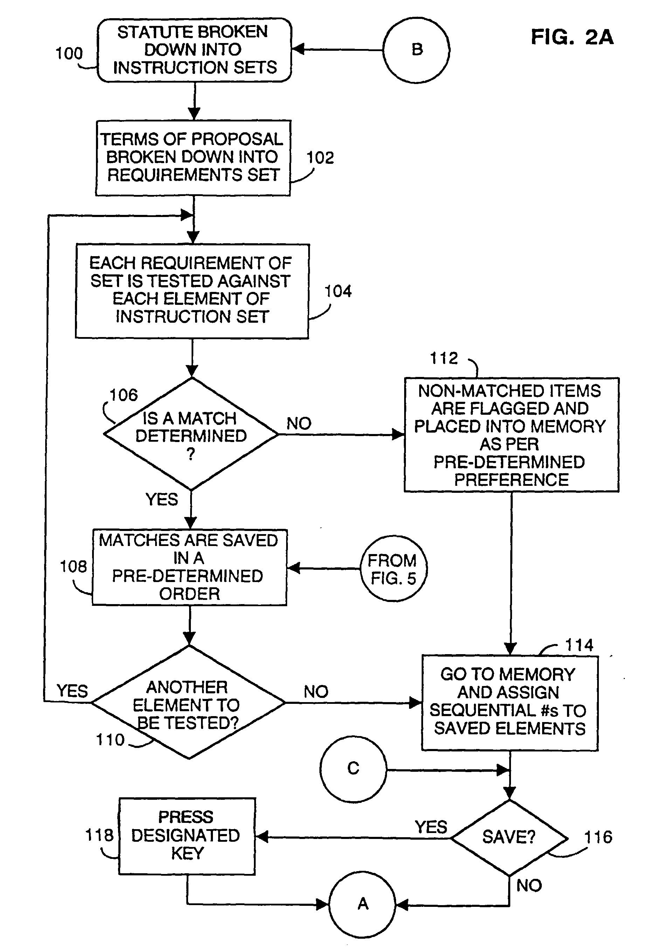

Turning to FIG. 2A, there is shown an upper level flowchart of the method of creating a statute-based or rules-based document or print stream (hereinafter, the intended output will simply be referred to as a rules-based document).

The method begins at step 100 where a statute or similar rules-based data stream is broken down into an instruction set comprised of rules elements. Rules-based data streams are those defined as containing one or more specific rules wherein the rules are applied in specific instances or as a result of specific choice selections or occurrences. For instance, the rules elements may be selected from any one or more of a plurality of document types, which includes: functional specifications; product specifications; regulations; lists; statutes; and, rules promulgations.

From step 100, the method advances to step 102 wherein the terms of a proposal document are broken down into a requirements set. A proposal document is the base document for the creation of rules-based documentation and is represented by: contract proposals or updated functional specifications; product specifications; regulations; lists; statutes; and, rules promulgations. The preferred target for the proposal documentation is a contract. A requirements set is the set of updates or changes required in the proposal document to produce a rules-based document.

From step 102, the method advances to step 104 where each requirement element (a need) of the requirements set is tested against each element of the instruction set (an available change) to determine whether a match exists that will require an input to the rules-based document. The method advances from step 104 to a query at step 106 which asks if the system has determined a match between a requirement and an instruction. If the response to the query is "NO," then non-matched items are flagged and these in-turn are placed into a memory in accordance with a pre-determined preference order. The order is determined at the time of application initialization and is determined by a weight assigned each characteristic. The purpose of the item weighting is to determine non-applicable changes for reporting, or analysis of changes associated with either the base document or the rules documents. Once weighted, the method advances from step 112 to step 114 where the system assigns sequential numbering to each saved element.

Returning to step 106, if the response to the query at step 106 is "YES," then the match is saved at step 108 in a pre-determined order which is established at the time of application initialization and is determined by a weight assigned each characteristic. The purpose of the item weighting is to determine applicable changes for reporting, or analysis of changes associated with either the base document or the rules documents. Once weighted, the method advances from step 108 to step 110 where the method queries as to whether or not another element (if any remain) of the requirements set is to be tested against each element of the instruction set (an available change) to determine any additional matches that will require an input to the rules-based document.

If the response to the query at step 110 is "YES," then the method returns to re-enter the flow at step 104 where the requirements elements is tested. However, if the response to the query at step 110 is "NO," then the method advances directly to step 114 where the system assigns sequential numbering to each saved element and its corresponding matched instruction.

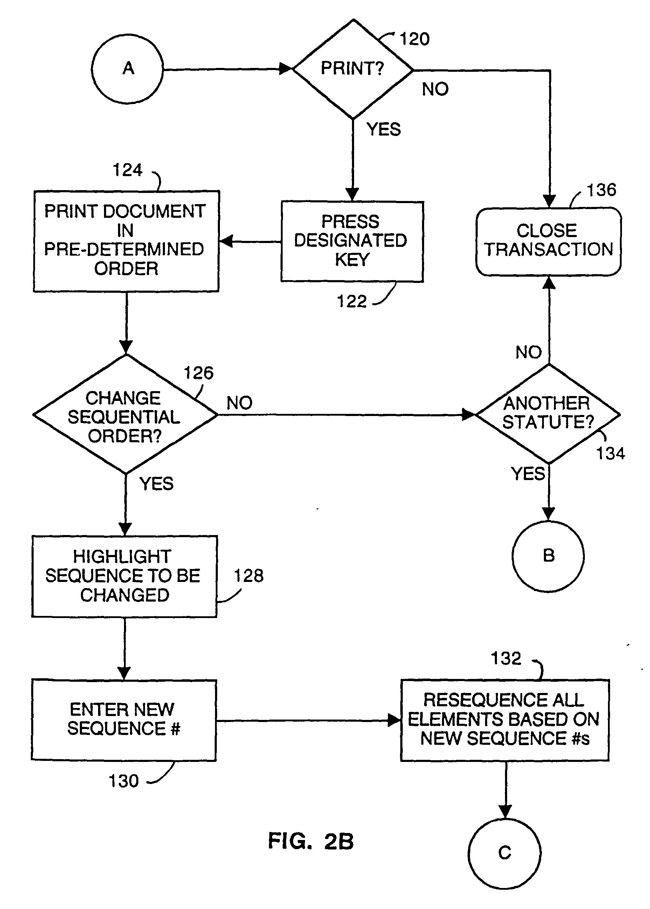

From step 114 the method advances to step 116 where the system queries as to whether or not the sequentially numbered elements are to be saved to a memory. If the response to the query is "YES," then the system operator presses the appropriate key at step 118 before advancing along path A to step 120 as is shown in FIG. 2B. In another embodiment of the invention, steps 116 and 118 can be determined by program settings and thus is an action transparent to the system user. If the response to the query at step 116 is "NO," however, then the method advances directly along path A to step 120 as is shown in FIG. 2B.

Turning to FIG. 2B, there is shown path A entering the system flow at step 120. At step 120, the system queries as to whether or not the rules-based document is to be printed. If the response to the query is "NO," then the system advances to step 136 and closes the application. The rules-based document is then saved as either a document, a template, or both. The choice can be either determined by the system operator or by the system itself as based on programmed application choices. If the response, however, to the query at step 120 is "YES," then the system advances to step 122 where the system operator presses the appropriate key before advancing to step 124. In another embodiment of the invention, steps 120 and 122 can be determined by program settings and thus is an action transparent to the system user.

At step 124, the system prints the rules-based document by selecting its component parts and assembling the parts based on the sequential order determined at step 114; the sequence order is visible to the system operator as a draft document and may be saved in memory; the matches made in step 108 may be reconciled in the draft document to form a finished document.

Reconciliation is performed after assembly of the draft document. Reconciliation comprises the step of displaying the draft document to a system user by printing a copy of the draft document or presenting the document elements on a monitor or screen. Document elements are displayed in sequential order. The system user is then allowed to respond to one or more queries and/or data prompts located within the displayed matches of the draft document. The system user responds to the one or more queries and/or data prompts by entering responses into the document draft which determines which elements are to be saved or which are to be eliminated. A new sequence for each of the document elements is then entered and saved in memory as a rules-based document.

Printing, or in the alternative, viewing of the sequentially assembled draft document may give rise to a need to change the sequential order of the document's elements; therefore, from step 124, the system advances to step 126 and queries as to whether or not a change in the sequential order is required. If the response to the query is "NO," then the system advances to a subsequent query at step 134; however, if the response is "YES," then the system advances to step 128 where the system operator selects the element to be changed. Selection of the element for re-sequencing can be accomplished by "highlighting" the passage to be re-sequenced or, in the alternative, selecting a sequence number in a "pop-up" screen from the application. The system will then require entry of the selected element's new sequence number, in step 130, before re-sequencing, in step 132, all of the document elements as based upon the new sequence numbers. From step 132, the system advances along path C to re-enter the method flow at step 116.

Returning to step 134, the system queries as to whether or not another rules-based data stream is to be applied to the base document. If the response to the query is "YES," then the method advances along path B to re-enter the method flow at step 100. If, however, the response to the query at step 134 is "NO," then the method advances to step 136 and closes the application. The rules-based document is then saved as either a document, a template, or both. The choice can be either determined by the system operator or by the system itself as based on programmed application choices.

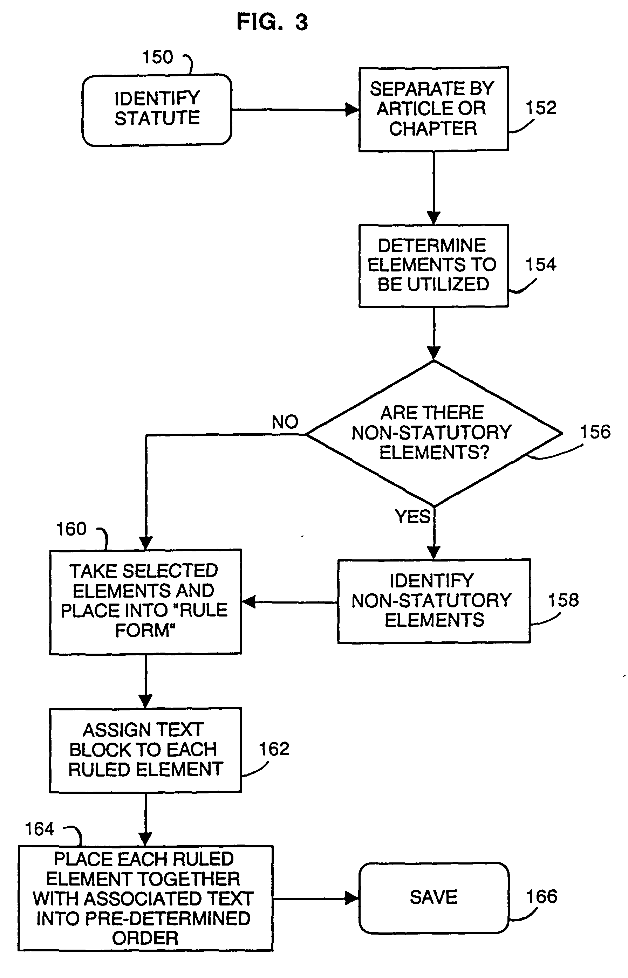

The specific nature of the parsing and formation of elements is now examined by turning to FIG. 3, where there is shown a flowchart of the method of breaking down a selected statute or rules-based data stream into one or more instruction elements.

The set of rules to be applied is determined in a series of steps. The steps begin with identifying, at step 150, the rules-based documentation to be applied. The documentation is selected from within application program 24. The method then advances to step 152, where the system parses the rules-based documentation, based on pre-determined weighting criteria, to determine a set of rules to be utilized for application to the base document. The method then advances from step 154 to a query at step 156 which asks if there are any non-statutory elements to be assigned. If the response to the query is "NO," then the method advances directly to step 160. However, if the response to the query at step 156 is "YES," then any non-rules-based documentation elements, such as special rules or alternatives that are required in the draft document, are determined, at step 158, for application to the document. Non-rules-based elements may be derived from a database of assignable elements or may be entered manually. The rules elements of step 154 and the non-rules-based documentation elements of step 158 are then combined into a second set of rules at step 160. This second set of rules comprises rule elements which are formatted in a rules form. Particular text blocks are then assigned, at step 162, to each of the rules elements before placing them, together with their associated text block, into a predetermined order in step 164. The rule elements are then saved in memory at step 166. The practical effect of this step is to provide boilerplate text for certain elements that are now part of the draft document. When weighting alone can not determine which element is to be selected for inclusion within the draft document, then each element will be associated with alternative text entries that will be further culled at the reconciliation of the draft document.

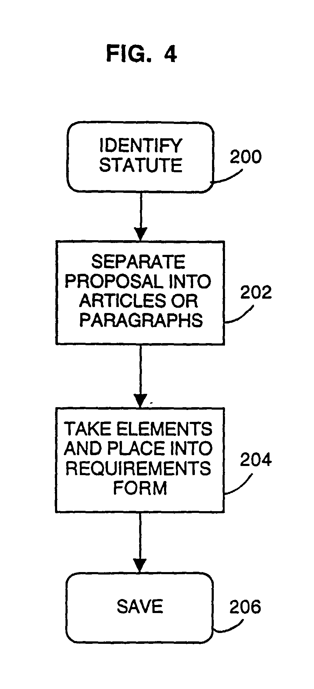

Turning to FIG. 4, there is shown a flowchart of the method of breaking down a selected proposal into one or more requirements elements. The flow begins with the determination, at step 200, of the rules-based data stream to be applied to a proposal document (base document). The proposal document can be a contract, a template, a proposal, a specification, or any one of the possible document forms that might require updating of amendment as based upon changes to other documents or rules. A proposal document can be derived from a rules-based data stream or document by simply selecting the rules-based data stream or document as both a proposal and as a requirements set in the application start-up.

The proposal may be viewed as a set of proposal terms. The proposal terms are separated at step 202 in accordance with their article or paragraph structure; these are then parsed so as to further determine a set of proposal elements. The method advances to step 204 where the proposal elements are placed into a requirements format before being saved in memory at step 206. The saved requirements elements will be utilized at step 104 as is shown in FIG. 2A.

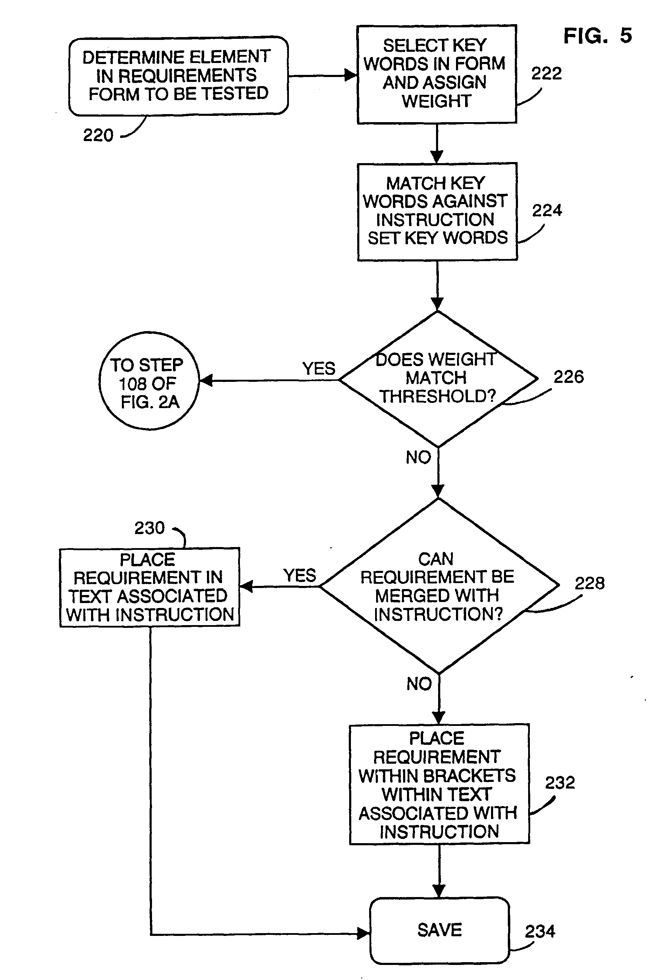

Turning to FIG. 5, there is shown a flowchart of the method of testing each document requirement against each element of an applicable instruction set to determine a match.

Matches are determined by selecting, at step 220, a requirements element to be tested. The method then advances to step 222 where one or more key words are selected within the requirements element, and the key word is assigned a weight value. The key words are then matched, in step 224, against the set of instruction elements and a match is determined based upon a unique weighting requirement for each rule; and, a target weight is determined for each of the matches. If the weight equals zero, then a non-match has occurred.

Matches are recorded as based upon a set of criteria corresponding to each of the rules in a set. The criteria further comprises: rules for highlighting text to be reconciled; rules for inserting text into the document; rules for bracketing and underlining text to be reconciled; and, rules for deleting text from the document.

The method advances from step 224 to a query at step 226. At step 226, the method queries as to whether or not an element's weight meets a particular threshold weight that has been pre-determined. Each of the matches is assigned a threshold weight; and, if the threshold is exceeded then it is determined that a match has occurred. If the threshold has not been exceeded, then it is determined that a non-match has occurred. If the response to the query at step 226 is "YES," then the method saves the match by returning to step 108 of FIG. 2A. However, if the response to the query is "NO," then the method advances to the query at step 228 which asks whether or not the particular match can be merged into the draft document. If the response to the query is "NO," and the match can not be merged, then a set of instructions is associated, at step 232, with each of the requirements elements in the draft document wherein the instructions further comprise a query and/or a data prompt for selecting a desired text input. The requirements and associated instructions are saved to memory at step 234 for use at step 124 of FIG. 2B. If the response to the query at step 228 is "YES," however, then the method advances to step 230 where the requirement is placed in the document text together with its associated instructions before advancing to step 234 to be saved for subsequent use.

While certain embodiments have been described above in terms of the system within which the subject method may be employed, the invention is not limited to such a context. The system shown in FIG. 1 is an example of a host system for the invention, and the system elements are intended merely to exemplify the type of peripherals and software components that can be used with the invention.

In the foregoing specification, the invention has been described with reference to specific embodiments thereof. It will, however, be evident that various modifications and changes may be made thereto without departing from the broader spirit and scope of the invention. The specification and drawings are, accordingly, to be regarded in an illustrative rather than a restrictive sense.

## Claims

1. A method for creating a document, in a data processing system, comprising the steps of:
(a) selecting (100) a set of rules elements for application to said document;
(b) determining (102) a set of requirements comprising requirements elements which form an outline for said document;
(c) testing (104) each of said requirements elements against each one of said set of rules elements to determine a match; and, if said match occurs then placing (108) said match into a first memory (32); or, if said match does not occur, resulting in an unmatched requirements element, then flagging said unmatched requirements element and placing (112) said unmatched requirements element into said first memory (32);
(d) combining (114) each of said matches and each of said unmatched requirements elements into a set of document elements and assigning a sequence to each of said document elements;
(e) saving (118) said set of sequenced document elements in a second memory (34) as a draft document; and
(f) reconciling said matches in said draft document to form said document.

2. The method of Claim 1, wherein said set of rules is one of a plurality of rules-based documentation, said plurality of rules-based documentation including:
(a) functional specifications;
(b) product specifications;
(c) regulations;
(d) lists; and
(e) rules promulgations.

3. The method of Claim 1 or 2, wherein said set of rules is determined in a manner comprising the further steps of:
(a) identifying said rules-based documentation to be applied to said document;
(b) parsing said rules-based documentation to determine a set of rules to be utilized for application to said document;
(c) determining any non-rules-based documentation elements to be utilized for application to said document;
(d) placing said rules elements and said non-rules-based documentation elements into a second set of rules, wherein said second set of rules comprises rule elements which are formatted in a rules form;
(e) assigning a particular one of a plurality of text blocks to each of said rule elements;
(f) placing each of said rule elements, together with its said particular one of said plurality of text blocks into a pre-determined order; and
(g) saving said rule elements in said first memory.

4. The method of any one of Claims 1 to 3, wherein said set of requirements is determined in a manner comprising the steps of:
(a) determining a set of proposal terms;
(b) parsing said proposal terms so as to further determine a set of proposal elements;
(c) placing said proposal elements into a requirements format; and
(d) saving said proposal elements in said first memory.

5. The method of any one of Claims 1 to 4, wherein said match determination further comprises the steps of:
(a) determining said requirements element to be tested;
(b) selecting one or more key words within said requirements element, wherein said one or more key words are assigned a weight value;
(c) matching said key words against said set of rules and determining a weight for each of said matches; and, if said weight equals zero then determining that a non-match has occurred; and
(d) assigning a threshold weight for each of said matches and if said threshold is exceeded then determining that a match has occurred and if said threshold has not been exceeded then determining that said non-match has occurred.

6. The method of any one of the preceding claims, wherein said match is merged into said draft document and if said match can not be merged, then associating a set of instructions with each of said requirements elements in said draft document wherein said instructions further comprise a query and/or a data prompt for selecting a desired text input.

7. The method of any one of the preceding claims, wherein said reconciliation comprises the steps of:
(a) displaying said draft document to a system user;
(b) allowing said system user to respond to one or more queries and/or data prompts located within said draft document;
(c) responding to said one or more queries and/or data prompts by entering responses into said document draft as determined by a system user;
(d) entering a new sequence for each of said document elements; and
(e) saving said new sequence in said second memory as said document.

8. The method of Claim 7, wherein said display is accomplished by a printed copy of said draft document; and, wherein said document elements are printed in sequential order as determined in 1(d).

9. The method of Claim 7, wherein said display is presented on a monitor (42) or screen; and, wherein said document elements are displayed in sequential order as determined in 1(d).

10. The method of any one of the preceding claims, wherein said match is determined based upon a unique weighting requirement for said each one of said set of rules.

11. The method of any one of the preceding claims, wherein said match is recorded as based upon a set of criteria corresponding to each of said set of rules; said criteria further comprising:
(a) rules for highlighting text to be reconciled;
(b) rules for inserting text into said document;
(c) rules for bracketing text to be reconciled;
(d) rules for underlining text to be reconciled; and
(e) rules for deleting text from said document.

12. A system (10) for creating a document in a data processing environment, comprising:
(a) application software (24) for manipulating data to create said document;
(b) a set of rules for application to said document;
(c) a proposal for said document further comprising a set of document requirements;
(d) matching means (22) for matching each one of said set of document requirements against each one of said set of rules to determine a match to be placed in a set of matches to be saved in a memory;
(e) first memory means (32), comprising said memory, for saving said match;
(f) second memory means (34) for saving said set of rules;
(g) third memory means (36) for saving said set of document requirements;
(h) determining means (22) for determining which, if any, of said requirements does not match any one of said rules;
(i) fourth memory means (38) for saving said non-matched requirements;
(j) combining means (22) for combining each of said matches with each of said non-matches; and
(k) sequencing means (22) for sequencing each of said matches and each of said non-matches in an order based upon pre-determined sequencing rules, so as to create a draft document to be displayed, and display means (42) for displaying said draft document.

13. The system of claim 12, wherein said second memory means (34) is a PROM which is dedicated to one or more specific sets of rules.
